**Europäisches Patentamt**

**European Patent Office**

**Office européen des brevets**

(11) Veröffentlichungsnummer : **0 221 095 B1**

(12) # EUROPÄISCHE PATENTSCHRIFT

(45) Veröffentlichungstag der Patentschrift :
**06.03.91 Patentblatt 91/10**

(51) Int. Cl.$^5$ : **B01D 53/18, F28F 25/08**

(21) Anmeldenummer : **86902341.6**

(22) Anmeldetag : **25.04.86**

(86) Internationale Anmeldenummer :
**PCT/DE86/00175**

(87) Internationale Veröffentlichungsnummer :
**WO 86/06296 06.11.86 Gazette 86/24**

(54) **WIRBELPACKUNG UND VERFAHREN ZU DEREN HERSTELLUNG.**

(30) Priorität : **27.04.85 DE 3515300**

(43) Veröffentlichungstag der Anmeldung :
**13.05.87 Patentblatt 87/20**

(45) Bekanntmachung des Hinweises auf die
Patenterteilung :
**06.03.91 Patentblatt 91/10**

(84) Benannte Vertragsstaaten :
**AT BE CH DE FR GB IT LI LU NL SE**

(56) Entgegenhaltungen :
**EP-A- 0 063 729**
**DE-A- 3 110 859**

(73) Patentinhaber : **GEBRÜDER SULZER
AKTIENGESELLSCHAFT
Zürcherstrasse 9
CH-8401 Winterthur (CH)**

(72) Erfinder : **WILHELM, Gerd
Gerhart-Hauptmann-Weg 6
W-4040 Neuss 21 (DE)**

(74) Vertreter : **Fitzner, Ulrich, Dr.
Am Eichförstchen 2a
W-4030 Ratingen 4 (DE)**

**Beschreibung**

Thermische Stoffaustauschprozesse wie Absorption, Destillation, Extraktion werden meistens in senkrecht stehenden Säulenapparaten durchgeführt. Um möglichst große Kontaktflächen zwischen den im Austausch stehenden Phasen zu erzielen, werden in diese Kolonnen Einbauten eingebracht, die neben dieser primären Aufgabe, nämlich eine große Austauschfläche zu schaffen, weitere wesentliche Anforderungen erfüllen müssen, und zwar nach einer hohen Gleichmäßigkeit der Verteilung der fluiden Phasen in jedem waagerechten Querschnitt der Säule, nach einem geringen Strömungswiderstand, nach geringen Herstellungs- und Montagekosten. Zur Schaffung der Phasenkontaktfläche in einem Stoffaustauschapparat bedient man sich neben Austauschböden, die an diskreten Stellen von Kolonnen eingebaut sind, sogenannter Füllkörper, die den Innenraum von Kolonnen gleichmäßig füllen sollen. Bei diesen Füllkörpern unterscheidet man nach zwei Arten ihrer Anordnung, die regellose Schüttung und die regelmäßig aufgebaute Packung.

Als Elemente regelloser Schüttungen sind Raschig-Ringe, Pall-Ringe, Bialecki-Ringe und andere aus der einschlägigen Literatur bekannt, z.B. aus 1. Billet, R.: Industrielle Destillation, ISBN 3-527-25371-8, Seite 95, Seite 263, 2. Billet, R.: Energieeinsparung bei thermischen Stofftrennverfahren ISBN 3-7785-0912-8, Seite 61, Seite 140 und Seite 183. Bei regellosen Schüttungen aus solchen Füllkörpern läßt sich nicht vermeiden, daß sowohl im Säuleninnern wie auch besonders am Säulenrand größere Ungleichverteilungen der Füllkörper auftreten, wodurch eine Kanal- bzw. Bachbildung der strömenden Phasen eintritt. Die Mengenströme der fluiden Phasen werden, über den Querschnitt betrachtet, ebenfalls ungleichmäßig verteilt, und dies ist die Ursache für eine Beeinträchtigung der Trennwirksamkeit der Kolonne.

Zu den geometrisch regelmäßig aufgebauten Füllungen in Stoffaustauschapparaten zählen unter anderem die von den Firmen Montz, Sulzer und Raschig vertriebenen Packungen, ferner die unter den Namen Gridpackung und Impulspackung bekannten Einbauten, sowie Streckmetallpackungen und aus den obengenannten Einzelelementen (z.B. Bialecki-Ring) geordnet aufgebaute Packungen (vgl. o.a. 1. Literaturzitat, Seiten 95, 171, 303 und 2. Literaturzitat, Seiten 62, 145 bis 153, 183, 247, 350 bis 352). Geometrisch regelmäßig geordnete Packungen können aber ebenso wie regellose Schüttungen den Nachteil der Kanal- bzw. Bachbildung aufweisen. Vornehmlich tritt eine Beeinträchtigung der Trennwirksamkeit auf, wenn es sich um den Stoffaustausch zwischen Gas (Dampf) und Flüssigkeit handelt und eine nur geringe Ungleichmäßigkeit in der Flüssigkeitsaufgabe am oberen Kolonnenende im weiteren Strömungsverlauf der Flüssigkeit nicht behoben werden kann, weil eine Quervermischung zwischen den herabfließenden Flüssigkeitssträhnen nicht erfolgt. Ein solches Problem verschärft sich bei relativ geringen Flüssigkeitsströmen, wie sie bei Vakuumrektifikationen oder bei Absorptionsvorgängen üblich sind. Besondere Beeinträchtigungen des Stoffaustauschprozesses erfahren unter diesen Umständen senkrecht stehende Packungen mit achsenparalleler Ausrichtung. Solche Konstruktionen sind in den oben genannten Büchern abgebildet. Im 1. Zitat, Seite 171 und im 2. Zitat, Seite 147, finden sich Abbildungen einer Streckmetallpackung und im 2. Zitat, Seite 183, sind eine Impulspackung und eine Bialecki-Packung abgebildet, die das Merkmal achsenparalleler Anordnung mit dem Nachteil geringer Quervermischungen aufweisen. Es ist bekannt, daß diese Packungen geringe Trennwirksamkeiten besitzen.

Andere Packungen versuchen diesen Nachteil zu vermeiden, indem sie schräg zur lotrechten Säulenachse Strömungskanäle ausbilden, wie es z.B. im Fall der Sulzer- und Montz-Packungen geschieht, vgl. Bild 4.34 unten Seite 145, Bild 4.39, Seite 150 und Bild 4.40, Seite 151 des 2. Literaturzitats.

Die Grid-Packung, Bild 4.34 oben, Seite 145, des 2. Literaturzitats ist senkrecht zur Säulenachse strukturiert. Jede Lage hat mit dem Verlauf der geometrischen Vertiefungen und Erhebungen eine bestimmte Ausrichtung. Durch diese Ausgestaltungen sowohl der Sulzer- und Montz-, aber auch der Grid-Packungen und anderer sind die Komponenten der Flüssigkeitsströmung quer zur Hauptströmungsrichtung lagenweise in einer bevorzugten Richtung ausgeprägt und nicht gleichmäßig radial verteilt. Bei den genannten Packungen versucht man zwar diesen Mangel durch lagen- bzw. blockweise Änderung der Packungsanordnung auszugleichen, muß dafür aber besonderen Fertigungs- und Montageaufwand in Kauf nehmen.

Es gibt ferner Packungen, die im Prinzip die achsenparallele Durchströmung in Säulen bzw. Kanälen beibehalten, diese Hauptströmungsrichtung aber in einem zick-zack-förmigen Kanal verfolgen, wie es zum Beispiel in der Veröffentlichung von Kulbe und anderen: Chem. Techn. 34. Jg., Heft 5, Mai 82, ab Seite 236, beschrieben und dort in bild 1 schematisch dargestellt ist. Dieser Arbeit sind die DD-A-200 608 und die DE-A-29 43 061 verwandt.

Aus der DE-A-31 10 859 sind Packungen bekannt, die aus Schraubenflächen oder gewellten Bändern aufgebaut sind. Es handelt sich hierbei um Flächenstücke, die nicht eben sind mit der Folge, daß Fertigung und Montage mit Schwierigkeiten verbunden sind.

Aus dem Umstand, daß zur Vermeidung von Bach-, Kanal- und Strähnenbildung in den Strömungen der am Stoffaustausch beteiligten Phasen eine gleichmäßige Verteilung der Stoff-ströme über den horizontalen Querschnitt für die Trennwirkung vorteilhaft ist, hat sich die vorliegende Erfindung die Aufgabe gestellt, für Säulenapparate und Strömungskanäle eine Packung bereitzustellen, die ventilatorartige Anordnungen von Leitblechen aufweist, die die Strömungsmedien in der Säule oder im Kanal aus ihrer Hauptströmungsrichtung nach allen Seiten auslenken und benachbarte Teilströme miteinander vermischen, wobei den Erfordernissen einer einfachen Herstellung und leichten Montage der Einbauten genügt wird.

Diese Aufgabe wird dadurch gelöst, daß die Packung eine den Querschnitt der Säulen oder Kanäle füllende Ebene zeigt, deren Grundraster aus regulären Vielecken besteht mit darauf befindlichen, reliefartigen, teiloffenen Erhebungen, die von den Leitblechen gebildet werden, die geschlossene und/oder teilgeschlossene Flächen aufweisen.

Mit anderen Worten bedeutet das, daß in einem den Querschnitt der Kolonne ausfüllenden Raster, das durch einfache ebene Figuren gleichmäßig aufgebaut ist, kleine Erhebungen oder Vertiefungen, z.B. in Form von Pyramiden aufgesetzt sind, deren Seiten ganz oder teilweise offen oder mindestens nicht alle geschlossen sind, so daß zwei unterschiedliche fluide Phasen auch im Gegenstrom durch die Öffnungen treten können und durch die schräg zur Säulenachse liegenden Kanten und Seiten der Erhebungen und-/oder Vertiefungen mäßige Auslenkungen zu ihrer Hauptströmungsrichtung erfahren, die sich bereits im jeweils betrachteten Querschnitt in ihrer vektoriellen Summe völlig oder nahezu gegenseitig wieder aufheden. Die benachbarten Teilflächen der reliefartigen Struktur einer Querschnittslage bilden feststehende, ventilatorartige Anordnungen von Leitblechen bzw. Leitebenen, die die Strömungsmedien in der Säule bzw. im Kanal aus ihrer Hauptströmungsrichtung nach allen Seiten etwa gleichmäßig zur Auslenkung bringen und benachbarte Teilströme miteinander vermischen.

Weitere Ausgestaltungen und bevorzugte Ausführungsformen sowie deren Herstellung sind in den Unteransprüchen beschrieben. Es zeigen :

Fig. 1 eine als Drahtgitter ausgebildete Grundstruktur auf Basis regulärer vierseitiger Pyramiden,

Fig. 2 eine erfindungsgemäße Ausgestaltung der Fig. 1, bei der jeweils auf gegenüberliegenden Pyramidenseiten durchgehende Flächen vorhanden sind und die Pyramidenspitzen in die gleiche Richtung weisen,

Fig. 3 eine Hervorhebung von vier benachbarten Pyramidenseiten aus Fig. 2 zu einer ventilatorartigen Anordnung,

Fig. 4 und Fig. 5 die Draufsicht von zwei aufeinanderfolgenden Lagen einer bevorzugten Ausführung der Packung nach Fig. 2,

Fig. 6 die Draufsicht der ventilatorartig angeordneten Pyramidenseiten in der Ausführungsform gemäß Fig. 2,

Fig. 7 die Abwicklung und Fig. 8 die Kantung eines gestanzten Blechstreifens, aus dem sich die Ausführungsform gemäß Fig. 2 aufbauen läßt,

Fig. 9 die Darstellung aneinandergefügter Bleche, bearbeitet nach Art von Fig. 7 und Fig. 8, zur Bildung der Ausführungsform gemäß Fig. 2,

Fig. 10 eine weitere Ausführung mit teilweise geschlossenen Pyramidenflächen, bei der in den Pyramidenspitzen zusammenstoßende geschlossene Seiten benachbarter Pyramiden keine ebene Fläche bilden,

Fig. 11 eine Hervorhebung aus Fig. 10 von acht benachbarten Pyramidenseiten, von denen jeweils zwei eine ebene Fläche bilden, zu einer ventilatorartigen Anordnung,

Fig. 12 die Abwicklung eines beliebig ausgedehnten, gestanzten Bleches, bei dem sich die Sequenz zwischen den Schnitten a-a und b-b wiederholt, zum Aufbau der Ausführung gemäß Fig. 10,

Fig. 13 eine Packung auf der Basis regulärer sechsseitiger Pyramiden,

Fig. 14 eine Hervorhebung aus Fig. 13 mit der Darstellung von 6 Pyramidenseiten, von denen jeweils zwei eine ebene Fläche bilden, zu einer feststehenden ventilatorartigen Anordnung,

Fig. 15 die Draufsicht einer weiteren Ausführungsform auf der Basis gleichseitiger Dreiecke als Netzstruktur mit aufgesetzten dreiseitigen Pyramiden, von denen nur jeweils eine Seitenfläche (strichliert) geschlossen bleibt.

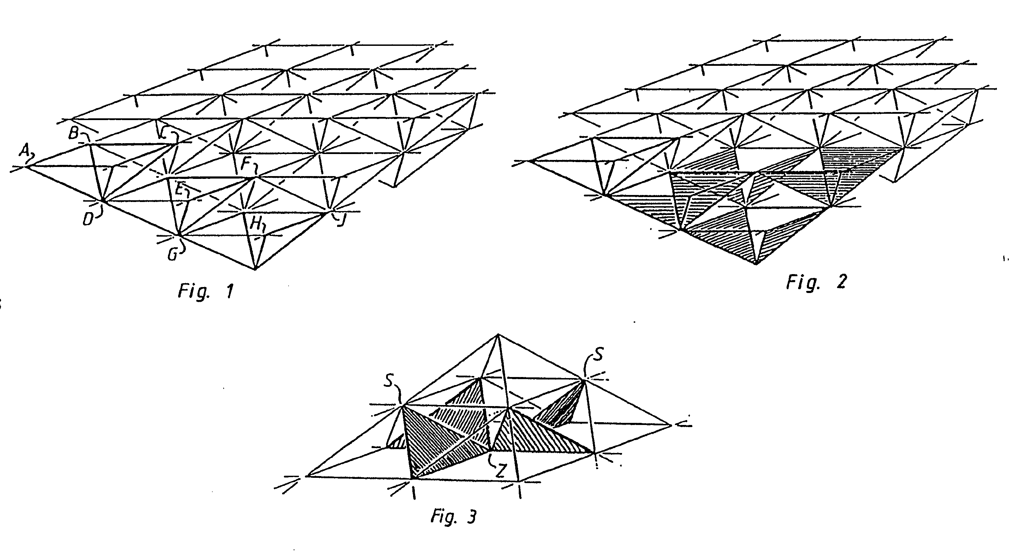

Bei der Packung nach Fig. 1 sind die Basisflächen einer Lage Quadrate. Die Punkte A, B, C in Fig. 1 markieren Eckpunkte einer waagerecht in einer Kolonne eingebauten Ebene. Über jedem Quadrat ist eine regelmäßige Pyramide aufgebaut, deren Spitze in diesem Fall nach unten zeigt. Die Spitzen der Pyramiden einer Ebene sind die Eckpunkte derjenigen Quadrate, die die nach unten nächstfolgende Ebene darstellen. In Fig. 1 liegen die Punkte D, E, F in dieser Ebene. Die Punkte G, H, I liegen in der nach unten weiterfolgenden Ebene. Der Aufbau einer jeden Ebene ist gleich. Die aufeinanderfolgenden Ebenen sind – wie beschrieben – gegeneinander versetzt. Eine Packung dieser Art läßt sich dadurch herstellen, daß die Kanten der Grundflächen und Seiten der Pyramiden aus Draht hergestellt und in Kreuzungspunkten miteinander verbunden werden.

Eine erfindungsgemäße Ausgestaltung dieser Gittermuster sieht den zusätzlichen Einbau von Flächen (z.B. aus Blech) vor, und zwar auf jeweils gegenüberliegenden Pyramidenseiten. Die räumliche Struktur gemäß Fig. 2 ist dadurch gekennzeichnet, daß von jeder Kante des quadratischen Grundrasters nur eine Pyramidenfläche ausgeht. Die Flächen sind durch Stichlierung angedeutet.

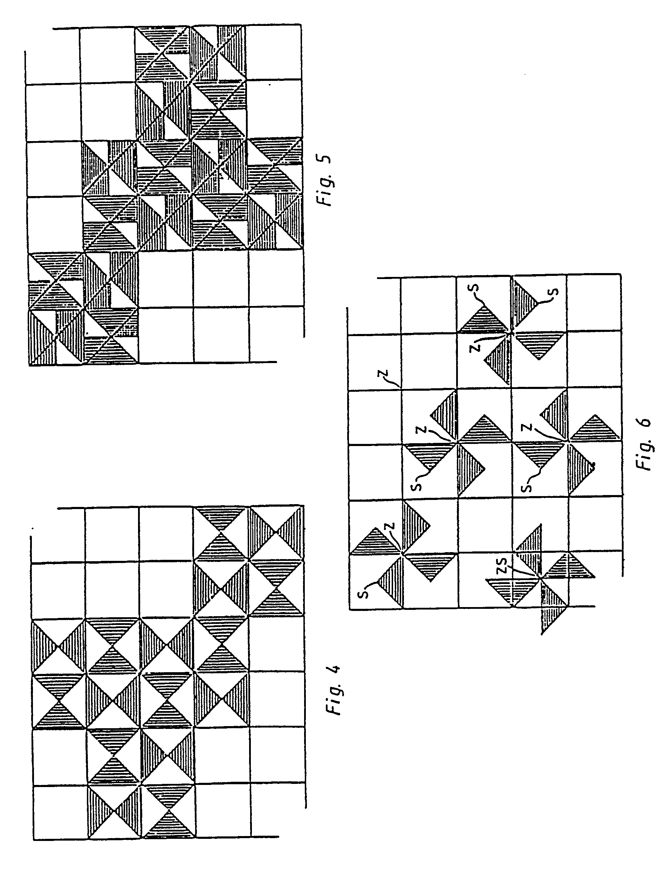

Beachtet man dieses kennzeichnende Merkmal der Ausführungsform gemäß Fig. 2, so finden sich, über die gesamte Packung verteilt, aus Pyramidenseiten gebildete, feststehende, ventilatorartige Anordnungen mit unterschiedlichem Drehsinn, von denen eine in Fig. 3 dargestellt ist. Die vorteilhafte Wirkungsweise dieser bevorzugten Ausführungsform der Packung wird anhand der Figuren 4 bis 6 erläutert.

Diese Ausführungsform beruht auf quadratischen Rasterungselementen der Grundebene und auf gleichmäßig darauf aufgebauten Pyramiden, deren Seitenflächen, wie in Fig. 2 dargestellt, abwechselnd geschlossen und offen sind. Da die Grundflächen der Pyramiden ebenfalls offen bleiben, tritt keine wesentliche Querschnittsverengung in Rohr oder Kanal ein, in die die Packungen eingebaut sind. Ein durch abrupte Änderung des Rohrquerschnitts bewirkter Druckverlust in den Strömungsmedien läßt sich dadurch vermeiden. Die Seitenflächen der Pyramiden beanspruchen bei mäßiger Dicke des Packungsmaterials nur 1 bis 2% der Querschnittsfläche. Trotzdem wird ein freier, nahezu achsenparalleler und geradliniger Strömungsverlauf verhindert. Die Projektionsfläche einer einzigen Lage der Packung deckt den freien Querschnitt nämlich bereits zu zirka 50% ab, wie aus Fig. 4 hervorgeht. Befinden sich zwei Lagen in der bestimmungsgemäßen Art übereinander, so beträgt der freie Teil der Projektionsfläche nur noch 25%, wie die Darstellung der Fig. 5 aufweist. Bereits durch drei Lagen wird die Projektionsfläche der Packung auf den Querschnitt völlig geschlossen. – Diese Betrachtung zeigt, daß die in einem Rohrkörper im Gleich- oder Gegenstrom fließenden Medien durch die beschriebenen Einbauten bei kaum veränderlicher freier Querschnittsfläche intensiv umgelenkt werden, was den Kontakt sich im Austausch befindlicher Fluide ohne Zweifel fördert. – Auf diesen Stoff- und/ oder Wärmeaustausch der strömenden Medien wirkt ein weiterer Umstand begünstigend, der beim Aufbau der Packung zunächst nicht beabsichtigt war und sich rein zufällig ergab. Betrachtet man wieder ein einlagiges Element einer Austauschpackung mit quadratischem Grundmuster und faßt den in der Querschnittsebene liegenden Eckpunkt vier aneinanderstoßender Grundquadrate ins Auge, das sind die Punkte Z in Fig. 6, so erkennt man, daß sich vier Seitenflächen von benachbarten Pyramiden zu einem vierflügeligen, propellerartigen, feststehenden Flügelrad zusammenfinden. Sieht man von Randlagen ab, so ist jeder Eckpunkt eines Grundquadrates das Zentrum eines solchen kleinen Flügels. Die auf einen solchen Flügel auftreffende Strömung wird dabei in Rotation versetzt. Es ist überraschend – sieht man wieder von Randlagen ab –, daß ebenso viele Flügel einen rechtsdrehenden wie linksdrehenden Einfluß auf die Strömungen ausüben. Fig. 6, die dieses Phänomen andeutet, zeigt die hervorgehobenen Elemente einer Lage in der Draufsicht. Es ist zu beachten, daß die Zentren Z der Flügel in einer anderen Ebene liegen als die Spitzen S der pyramidalen Seitenflächen. Die Packungseinbauten dienen also nicht nur als Umlenkungsschikanen für die strömenden Medien, sondern sie bewirken überraschenderweise eine rotierende Wirkung der kontaktierenden Phasen, wodurch auch eine phaseninterne Quervermischung stattfindet. – In der benachbarten Lage verschieben sich die Zentren Z zur Spitze S der Pyramiden der ursprünglich betrachteten Lage. Aus S entsteht das Zentrum ZS der Nachbarlage, Fig. 6.

Der Vorteil der pyramidenförmigen Packung liegt zuerst im gleichmäßigen Queraustausch der fluiden Phasen und damit in den verfahrenstechnischen Eigenschaften. Von der Ecke einer Grundfläche ausgehend, wird ein Teil der gleich-oder gegensinnig strömenden Fluide durch die Pyramidenkanten selbst oder durch die von ihnen gebildeten Flächen im weiteren Strömungsweg gelenkt. An jeder Pyramidenspitze findet sich ein Knotenpunkt, von dem aus zusammenfließende Teilströme einer Phase neu aufgeteilt und in ihrer Strömungsrichtung wieder beeinflußt werden, so daß neben der Auslenkung der Strömungen quer zur Achse des Strömungskanals auch eine Vermischung erfolgt. Das hat ein gleichmäßiges Trennergebnis zur Folge. Ein entstehender Druckverlust, z.B. in einem Gasstrom, kann durch die Gestaltung von abgerundeten Formen der pyramidenförmigen Grundstrukturen äußerst gering gehalten werden. Die Pyramidenseiten, soweit sie teilweise oder ganz geschlossen sind, bieten herabfließender Flüssigkeit die Möglichkeit der Ausbreitung und der Schaffung großer Austauschflächen. Die waagerechte Ausbreitung herabfließender Flüssigkeit kann durch waagerechte Riffelung der ausgebildeten Flächen verstärkt werden. Die Seitenflächen der Pyramiden können auch aus textilen und metallischen Geweben gebildet sein. Die waagerechten Auslenkungen der achsenparallelen Strömungen der Fluide erhalten in einer Packungslage, über den gesamten Querschnitt betrachtet, keine spezifische Ausrichtung ; sie sind sehr gleichmäßig in einem waagerechten Querschnitt über alle Richtungen verteilt. Insbesondere ist die Strömung zum Rand hin in keiner Weise bevorzugt, wie dies bei vielen anderen Packungen nach dem Stand der Technik der Fall ist.

Die überraschend gute Wirkung auf die Trennung von löslichen Gemischen konnte bei Rektifizierversuchen mit dem Gemisch 1,2-Dichlorethan- Toluol ermittelt werden. Die benutzte Packung war in der Form der Fig. 2 aufgebaut. Die quadratische Grundseite der elementaren Pyramide hatte eine Kantenlänge von 20 mm, der Säulendurchmesser betrug etwa 100 mm und die Packungshöhe von 28 aufeinandergeschichteten Lagen betrug 304 mm. Die Rektifizierversuche wurden bei totalem Rücklauf der kondensierten Dämpfe ausgeführt.

Beispiel 1 : Die Beheizung im Kolonnensumpf wurde so eingestellt, daß die Geschwindigkeit des aufsteigenden Gemischdampfes, bezogen auf den leeren Kolonnenquerschnitt, in der Meßstrecke im Mittel 0,41 m/s betrug und die Zusammensetzung des Flüssigkeitsstromes sich von 31,8 Mol-% unterhalb des Meßschusses auf 61,0 Mol-% 1,2-Dichlorethan oberhalb des Meßschusses änderte.

Beispiel 2 : Die Versuchsanordnung wurde gegenüber Beispiel 1 nicht geändert mit Ausnahme der Beheizung. Sie wurde so eingestellt, daß in der Meßstrecke die Gemischdampfgeschwindigkeit im Mittel 1,23 m/s betrug. Die Zusammensetzung des Flüssigkeitsstromes unterhalb der Meßstrecke wurde zu 34,7 Mol-% und oberhalb zu 66,4 Mol-% 1,2-Dichlorethan ermittelt.

Bezogen auf 1 Meter Säulenhöhe, läßt sich die Trennstufenzahl im Fall des 1. Beispiels auf $n_t = 4,9$ und im Fall des 2. Beispiels auf 5,3 $m^{-1}$ aus den Konzentrationsangaben ermitteln.

Weitere Vorteile des Packungsaufbaus, insbesondere diejenige der bevorzugten Ausführung gemäß Fig. 2, liegen in der Fertigung und Montage. Je nach Art des verwendeten Packungsmaterials kommen unterschiedliche Fertigungsverfahren in Betracht, so z.B. für Kunststoffe Spritzgießverfahen, für keramische Materialien Sintermethoden, für leicht schmelzbare Metalle, wie z.B. Aluminiumlegierungen, Gießverfahren. Für die Verarbeitung von Metallblechen läßt sich die nur mäßig stark ausgebildete Reliefstruktur einer Lage in einem Prägevorgang erzielen ; die Öffnungen an den Grund- und Seitenflächen der pyramidenförmigen Erhebungen bzw. Vertiefungen können anschließend ausgestanzt werden.

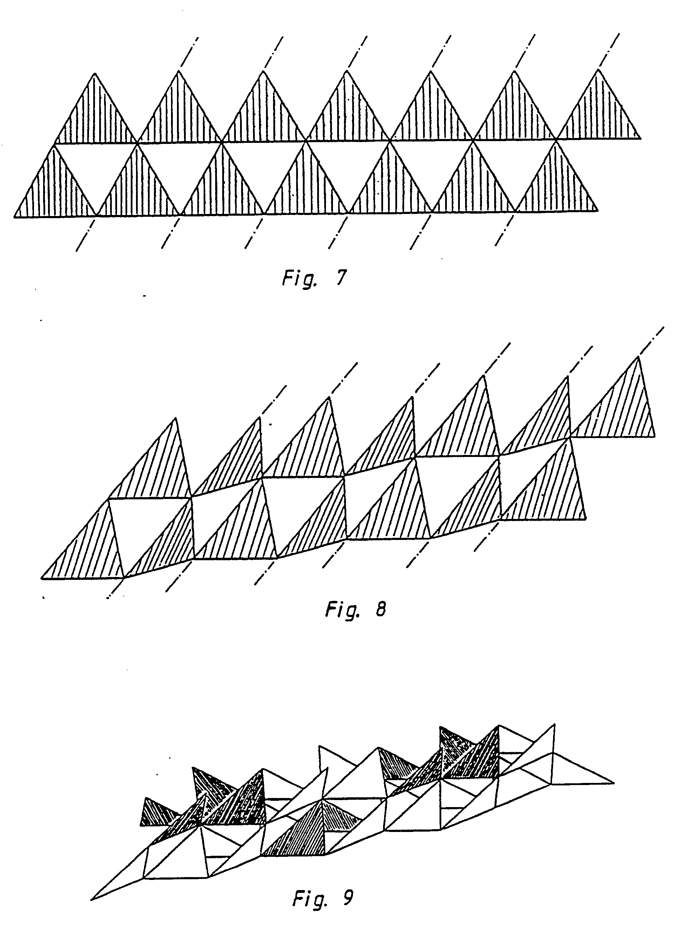

Bei dünnwandigen Materialien, insbesondere bei Metallblechen, läßt sich ein einfaches Herstellungsverfahren in erfindungsgemäßer Weise verwenden, wenn für den Packungsaufbau gemäß Fig. 2 Blechstreifen nach Art der Fig. 7 ausgestanzt und entlang der strickpunktierten Linien gekantet werden, so daß eine räumliche Struktur entsteht, wie sie in Fig. 8 dargestellt ist. Durch Aneinanderfügen von derartig geformten Blechstreifen läßt sich eine Doppellage der Packung gemäß Fig. 2 aufbauen, so wie es in Fig. 9 veranschaulicht ist. Fig. 9 enthält, strichliert hervorgehoben, in einer der beiden dargestellten Lagen eine Pyramide, bestehend aus zwei gegenüberliegenden Pyramidenseiten, und in der anderen Lage zwei ventilatorartig angeordnete Wirbelkörper, bestehend aus jeweils vier, in einem Pyramidenfußpunkt aneinanderstoßender Pyramidenseiten.

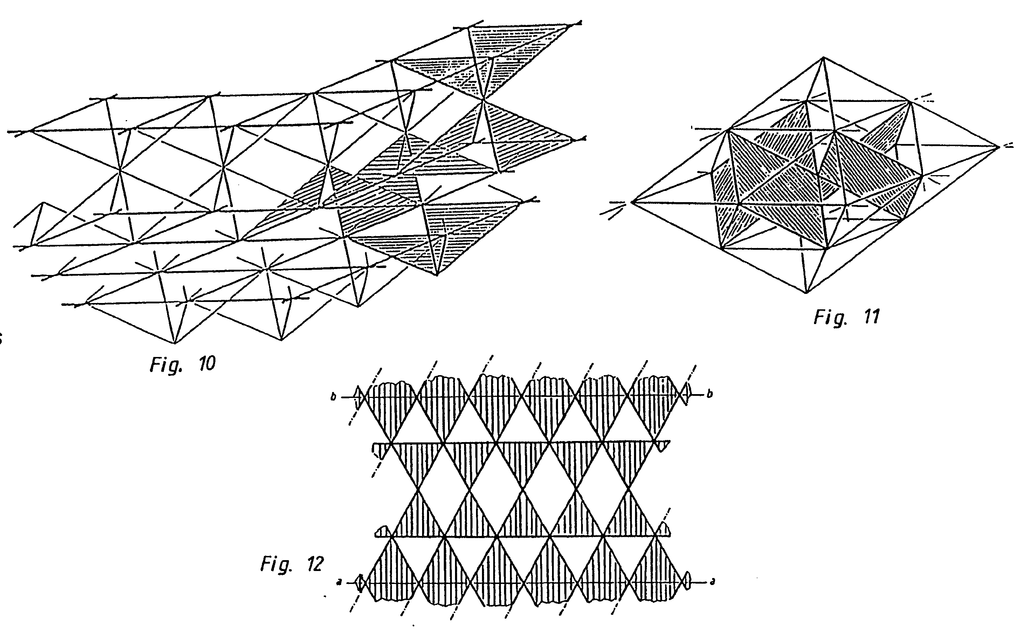

Eine Abwandlung der Packungsstruktur nach Art der Fig. 2 entsteht, wenn die Pyramidenspitzen zweier Lagen zu einer Doppellage aufeinander gesetzt werden und derartige Doppellagen aufeinanderfolgen. Zur Schaffung größerer Austauschflächen können Pyramidenseiten geschlossen werden. In Fig. 10 ist die Anordnung so getroffen, daß in den Pyramidenspitzen zusammenstoßende geschlossene Seiten benachbarter Pyramiden keine ebene Fläche bilden ; die quadratische Grundrasterung der beiden Doppellagen bleibt dabei erhalten und ist deckungsgleich.

Die Doppellagen können in einer weiter bevorzugten Ausführungsform so aufeinander geschichtet werden, daß Pyramidenseiten aneinanderstoßender Doppellagen jeweils eine ebene Fläche bilden. Dabei entstehen gemäß Fig. 11 Wirbelkörper mit wiederum vier Leitblechen, die jeweils aus zwei aneinander gefügten pyramidalen Seitenflächen bestehen.

In Fig. 11 sind vier solcher Leitbleche strichliert hervorgehoben. Bei dieser Anordnung ist bereits eine geeignet gewählte Doppellage in der senkrechten Projektion dicht, was das Durchschlagen von Teilströmen durch Querschnittsöffnungen über mehrere Lagen hinweg erschwert. Auch in der Anordnung gemäß Fig. 10 sind, von Randlagen abgesehen, gleich viele rechts- wie linkswirkende Anordnungen von Leitblechen, also von sogenannten Wirbelkörpern, mit ihrem rotierenden und quervermischenden Einfluß auf die Kolonnen- bzw. Kanalströmungen vorhanden.

In erfindungsgemäßer Weise läßt sich die in Fig. 11 skizzierte Packung aus gestanzten und gekanteten Blechen ebenfalls aufbauen, und zwar in analoger Weise, wie es in den Fig. 7 bis Fig. 9 für die Packung gemäß Fig. 2 gezeigt ist. Im Fall der Packung nach Fig. 11 läßt sich eine beliebig große Blechfläche verwenden, die gemäß Fig. 12 ausgestanzt ist und bei der sich das Stanzmuster zwischen den Markierungslinien a-a und b-b fortlaufend wiederholt. Bei analogem Aufbau treten die hier besprochenen und in den Fig. 10 und 11 skizzierten Phänomene bei einer regelmäßig sechseckigen Grundstruktur ebenso auf, die wie die quadratische Rasterung zu den bevorzugten Ausführungsformen zu zählen ist.

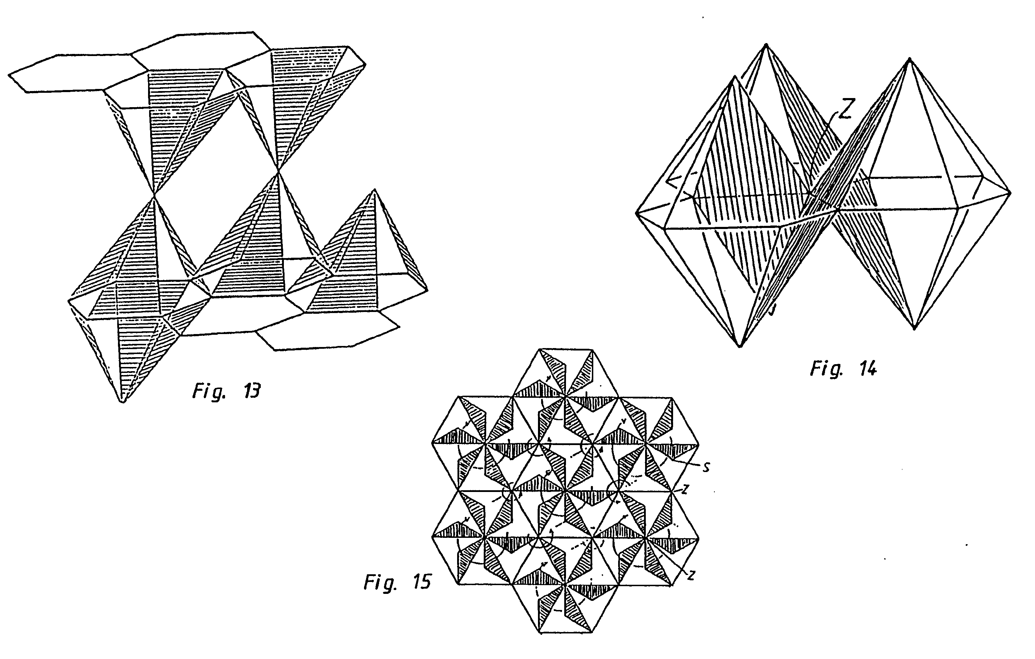

In Fig. 13 ist beispielsweise ein gleichmäßiges Sechseck Element einer ebenen Grundstruktur. Auf jedem Sechseck sind zwei Pyramiden aufgebaut, eine mit der Spitze nach oben, die andere nach unten weisend. Pyramidenspitzen benachbarter Lagen stehen jeweils aufeinander. Die Seiten einer Pyramide können wieder abwechselnd ganz oder teilweise geschlossen sein.

An den Rasterungsebenen der Sechsecke können Seitenflächen der Pyramiden wieder so aneinander gefügt werden, daß sich doppellagige Wirbelkörper bilden, wie es in Fig. 14 dargestellt ist. Der Punkt Z markiert den Berührungspunkt von Pyramidenseiten, die eine ventilatorartige Anordnung bilden. Die senkrechte Projektion der beiden Packungslagen zwischen zwei Rasterungsebenen, Fig. 13, ist wieder dicht.

Anstelle der Quadrate in den Darstellungen gemäß Fig. 2, Fig. 10 ind Fig. 11 können andere einfache geometrische Figuren ein ebenes Raster bilden, das die Grundstruktur für den Aufbau kleiner pyramidenförmiger Erhebungen und Vertiefungen ist. Fig. 15 basiert auf dem Grundraster gleichseitiger Dreiecke.

In der Draufsicht der Fig. 15 bedeuten Z die Eckpunkte der Dreiecke in der Rasterungsebene. S sind die Spitzen dreiseitiger Pyramiden. Sie heben sich von der Rasterungsebene ab. Beispielhaft ist in Fig. 15 dargestellt, daß nur eine von drei Seitenflächen der Pyramiden geschlossen ist. Treten die Spitzen S der Pyramiden nach derselben Seite aus der Rasterungsebene heraus, so entstehen wieder links-bzw. rechtswirkende Wirbelkörper, die aufgrund der geometrischen Konstellation die Strömungen im Apparat verschieden beeinflussen.

Aufeinanderfolgende Querschnittslagen, wie in Fig. 15 dargestellt, sind gegeneinander versetzt anzuordnen, um die senkrechte Projektionsfläche der Packung zu schließen. Hierzu benötigt man im Fall der Fig. 15 mindestens drei Lagen.

Die Größe einer Seite der flächigen Elemente (z.B. Dreieck, Viereck, Quadrat, Sechseck) kann nur wenige Millimeter (unter 10 mm) betragen, bei großen Kolonnendurchmessern wird man auch größere Abmessungen z.B. von 50 mm und mehr zulassen. Die Höhe der Pyramide bedarf keiner ausdrücklichen Festlegung. Sie kann z.B. der Länge einer Kante der Grundfläche gleichgesetzt werden.

Die Verwendungsmöglichkeiten der hier beschriebenen pyramidenförmig aufgebauten Packungen gehen über die oben genannten thermischen Trennverfahren hinaus. Auch bei Mischvorgängen, die u.a. zur Intensivierung des Wärmeaustausches und zur Kontaktierung von Reaktionspartnern technisch durchgeführt werden, lassen sich die beschriebenen Packungen verwenden.

## Ansprüche

1. Packung für Säulenapparate und Strömungskanäle, die ventilatorartige Anordnungen von Leitblechen aufweist, die die Strömungsmedien in der Säule oder im Kanal aus ihrer Hauptströmungsrichtung nach allen Seiten auslenken und benachbarte Teilströme miteinander vermischen, **dadurch gekennzeichnet,** daß die Packung eine den Querschnitt der Säulen oder Kanäle füllende Ebene zeigt, deren Grundraster aus regulären Vielecken besteht mit darauf befindlichen, reliefartigen, teiloffenen Erhebungen, die von den Leitblechen gebildet werden, die geschlossene und/ oder teilgeschlossene Flächen aufweisen.

2. Packung nach Anspruch 1, **dadurch gekennzeichnet,** daß die reliefartigen, teiloffenen Erhebungen pyramidenförmig ausgebildet sind.

3. Packung nach Anspruch 1 oder 2, **dadurch**

gekennzeichnet, daß das flächige Grundraster aus Quadraten und/oder Vierecken und/oder Dreiecken und/oder Sechsecken aufgebaut wird.

4. Packung nach Anspruch 2 oder 3, **dadurch gekennzeichnet,** daß die Kanten der Grund- und Seitenflächen der Pyramiden aus Stegen, aus Draht oder aus Fäden gebildet werden und die Grund- und Seitenflächen der Pyramiden im übrigen offen bleiben.

5. Packung nach Anspruch 2 oder 3, **dadurch gekennzeichnet,** daß die pyramidenförmig ausgebildeten Erhebungen und Vertiefungen so gestaltet sind, daß ihre Grund- und Seitenflächen nicht alle offen sind, sondern daß ein erheblicher Anteil der Anzahl dieser Flächen ganz oder teilweise geschlossen ist.

6. Packung nach Anspruch 2 oder 3, **dadurch gekennzeichnet,** daß eine Lage eines querschnittfüllenden Grundrasters aus etwa gleichvielen links- wie rechtsdrehend auf eine axiale Strömung einwirkenden, ventilatorartigen Anordnungen besteht.

7. Packung nach Anspruch 2 oder 3, **dadurch gekennzeichnet,** daß eine Lage mit quadratischem Grundraster regelmäßige Pyramiden enthält, deren Seiten wechselweise offen und geschlossen bzw. teilgeschlossen sind, so daß von jeder Grundseite des Quadrates nur eine Pyramidenseite aufgeht und die Pyramidenspitzen alle in die gleiche Richtung weisen.

8. Packung nach Anspruch 7, **dadurch gekennzeichnet, daß**

a) auf der Spitze der Pyramide der ersten Lage der Fußpunkt von vier benachbarten Pyramiden der zweiten Lage mit der Maßgabe steht, daß die Seiten der elementaren Quadrate beider Lagen parallel verlaufen,

b) die dritte Lage der ersten Lage mit dem Unterschied deckungsgleich ist, daß in der senkrechten Projektion die geschlossenen Pyramidenseiten der dritten Lage über die geöffneten Pyramidenseiten der ersten Lage zu liegen kommen,

c) die vierte Lage mit der zweiten mit dem Unterschied deckungsgleich ist, daß in der senkrechten Projektion die geschlossenen Pyramidenseiten der vierten Lage über die geöffneten Pyramidenseiten der zweiten Lage zu liegen kommen und

d) mit der fünften Lage sich der Zyklus im Packungsaufbau wiederholt.

9. Packung nach Anspruch 1 und 7, **dadurch gekennzeichnet,** daß nur die in Anspruch 8 beschriebene erste und zweite Lage den Zyklus im Packungsaufbau bestimmt.

10. Packung nach Anspruch 2, **dadurch gekennzeichnet,** daß ein Teil der Seitenflächen der Pyramiden derart geschlossen wird, daß auf jeder Kante eines elementaren Vielecks nur eine geschlossene Seitenfläche steht.

11. Packung nach Anspruch 1, **dadurch gekenn-**

zeichnet, daß das flächige Grundraster aus Quadraten besteht und daß darauf gleichseitige Pyramiden aufgebaut sind, deren Spitzen mit der Maßgabe in die gleiche Richtung weisen, daß diese Spitzen auf den Ecken der quadratischen Grundebene der nächsten Lage stehen.

12. Packung nach Anspruch 1, **dadurch gekennzeichnet**, daß auf einem ebenen Grundraster nach beiden Seiten regelmäßige Pyramiden aufgesetzt werden, so daß eine Doppellage entsteht, und die Packung sich aus solchen Doppellagen aufbaut.

13. Packung nach Anspruch 2 und 7, **dadurch gekennzeichnet**, daß zwei Lagen derart eine Doppellage bilden, daß die Pyramidenspitzen aneinanderstoßen und bei senkrechter Projektion auf die Doppellage die Projektionsfläche geschlossen ist.

14. Packung nach Anspruch 2 und 13, **dadurch gekennzeichnet**, daß die Packung aus gleichen Doppellagen besteht, wobei Grundseiten der Doppellagen derart aneinanderstoßen, daß die von den quadratischen Grundseiten ausgehenden geschlossenen oder teilgeschlossenen Pyramidenseiten einer Doppellage mit denjenigen der benachbarten Doppellage jeweils eine ebene Fläche bilden.

15. Packung nach Anspruch 1, **dadurch gekennzeichnet**, daß das flächige Grundraster aus Quadraten oder aus gleichseitigen Sechsecken besteht und daß darauf jeweils gleichseitige Pyramiden nach jeder Seite der Querschnittsfläche aufgebaut sind, so daß beim lagenweisen Einbau Spitzen benachbarter Lagen aneinanderstoßen.

16. Packung nach Anspruch 12, **dadurch gekennzeichnet**, daß die Grundflächen der Pyramiden und etwa die Hälfte der Anzahl der Seitenflächen der Pyramiden offen, und die übrigen Seitenflächen geschlossen bleiben.

17. Packung nach Anspruch 1, 2 und 5 oder 10 oder 16, **dadurch gekennzeichnet**, daß die geschlossenen Seitenflächen wellenförmig geformt sind, so daß die Erhebungen und Vertiefungen in diesen Flächen parallel zur Querschnittsfläche des Strömungskanals verlaufen.

18. Packung nach Anspruch 6, 12 oder 13, **dadurch gekennzeichnet**, daß anstelle eines Quadrates als Element der Grundfläche ein regelmäßiges Sechseck verwendet wird.

19. Verfahren zur Herstellung von Packungen gemäß Anspruch 8, **dadurch gekennzeichnet**, daß gestanzte und abgewinkelte Blechstreifen zum Aufbau einer Doppellage verwendet werden und aus derartigen Doppellagen, jeweils um 180° versetzt, die Packung aufgebaut wird.

20. Verfahren zur Herstellung von Packungen gemäß Anspruch 9, **dadurch gekennzeichnet**, daß zum Packungsaufbau anstelle der zweistreifigen Bleche gestanzte Bleche aus beliebig vielen Streifen benutzt werden, die sich durch wechselweises Aneinanderfügen der Streifen ergeben und abgewinkelt und aneinandergefügt werden.

**Claims**

1. A packing for column apparatuses and flow ducts, having fan-like arrangements of guide plates which deflect the flow media in the column or duct in all directions from its main direction of flow and mix adjacent component flows with one another, characterized in that the packing has a plane which fills the cross-section of the columns or ducts and whose base grid consists of regular polygons having thereon relief-like, partially open raised portions formed by the guides plates, which have closed and/or partially closed faces.

2. A packing according to claim 1, characterized in that the relief-like, partially opened raised portions are pyramidal in shape.

3. A packing according to claims 1 or 2, characterized in that the plane base grid is built up from squares and/or rectangles and/or triangles and/or hexagons.

4. A packing according to claims 2 or 3, characterized in that the edges of the base and lateral faces of the pyramids are formed from webs, wire or threads and the base and lateral faces of the pyramids otherwise remain open.

5. A packing according to claims 2 or 3, characterized in that the pyramidal raised portions and depressions are so shaped that their base and lateral faces are not all open, but an appreciable proportion of said faces are completely or partially closed.

6. A packing according to claims 2 or 3, characterized in that a layer of a cross-section-filling base grid consists of substantially the same number of fan-like arrangements acting counter-clockwise or clockwise on an axial flow.

7. A packing according to claims 2 or 3, characterized in that a layer with a square base grid contains regular pyramids whose sides are alternately open and closed or partially closed, so that only one side of the pyramid rises from each base side of the square and the apexes of the pyramids all point in the same direction.

8. A packing according to claim 7, characterized in that :

a) the base point of four adjacent pyramids of the second layer stands on the apex of the pyramid of the first layer, the sides of the elemental squares of both layers extending in parallel,
b) the third layer registers with the first layer, with the difference that in vertical projection the closed sides of the pyramids of the third layer come to lie over the opened sides of the pyramids of the first layer,
c) the fourth layer registers with the second layer, with the difference that in vertical projection the closed sides of the pyramids of the fourth layer come to lie over the opened sides of the pyramids of the second layer, and

d) with the fifth layer the cycle of the structure of the packing repeats itself.

9. A packing according to claims 1 and 7, characterized in that only the first and second layer described in claim 8 determines the cycle in the structure of the packing.

10. A packing according to claim 2, characterized in that a part of the side faces of the pyramids is so closed that only one closed side face stands on each edge of an elemental polygon.

11. A packing according to claim 1, characterized in that the plane base grid consists of squares and that built up thereon are equilateral pyramids whose apexes point in the same direction, said apexes standing on the corners of the square base plane of the next layer.

12. A packing according to claim 1, characterized in that placed on a plane base grid are pyramids regular on both sides, the result being a double layer, and the packing being built up from such double layers.

13. A packing according to claims 2 and 7, characterized in that two layers so form a double layer that the apexes of the pyramids about one another, and with a vertical projection to the double layer the projection face is closed.

14. A packing according to claims 2 and 13, characterized in that the packing consists of identical double layers, base sides of the double layers so abutting one another that the closed or partially closed sides of the pyramids of a double layer, starting from the square base sides, each cooperate with the sides of the pyramids of the adjacent double layer to form a plane face.

15. A packing according to claim 1, characterized in that the plane base grid consists of squares or equilateral hexagons and on each of these, equilateral pyramids are built up to each side of the cross-sectional face, so that with incorporation in layers, apexes of adjoining layers about one another.

16. A packing according to claim 12, characterized in that the base faces of the pyramids and substantially half the number of side faces of the pyramids are open, the other side faces remaining closed.

17. A packing according to claims 1, 2 and 5 or 10 or 16, characterized in that the closed side faces are so formed undulating that the raised portions and depressions in said faces extend parallel with the cross-sectional face of the flow duct.

18. A packing according to claims 6, 12 or 13, characterized in that a regular hexagon is used instead of a square as the element of the base face.

19. A method of producing packings according to claim 8, characterized in that punched and bent sheet metal strips are used to build up a double layer, and the packing is built up from such double layers, each offset by 180°.

20. A method of producing packings according to claim 9, characterized in that to build up the packing, instead of the two-strip metal sheets, use is made of punched metal sheets of any required number of strips, which are obtained and bent and joined to one another by alternately joining the strips to one another.

## Revendications

1. Plaque pour appareils à colonnes et canaux d'écoulement, qui comporte des systèmes de tôles de guidage à la manière de ventilateurs, lesquelles tôles de guidage dévient les fluides d'écoulement de leur direction d'écoulement principal dans la colonne ou dans le canal et mélangent les flux partiels voisins entre eux, caractérisée en ce que la plaque présente un plan qui remplit la section transversale des colonnes ou des canaux, plan dont la trame de base se compose de polygones réguliers sur lesquels se trouvent des bosses en forme de relief et partiellement ouvertes, qui sont formées par les tôles de guidage qui présentent des surfaces fermées et/ou partiellement fermées.

2. Plaque selon la revendication 1, caractérisée en ce que les bosses en forme de relief et partiellement ouvertes sont conformées en pyramides.

3. Plaque selon la revendication 1 ou 2, caractérisée en ce que la trame de base plane est constituée de carrés et/ou de quadrilatères et/ou de triangles et/ou d'hexagones.

4. Plaque selon la revendication 2 ou 3, caractérisée en ce que les bords des bases et des faces latérales des pyramides sont formés de barrettes, de fil métallique ou de filaments et, pour le reste, les bases et les faces latérales de la pyramide restent ouvertes.

5. Plaque selon la revendication 2 ou 3, caractérisée en ce que les bosses et renfoncements conformés en pyramides sont réalisés de manière telle que leurs bases et leurs faces latérales ne sont pas toutes, ouvertes mais une part importante du nombre de ces surfaces est entièrement ou partiellement fermée.

6. Plaque selon la revendication 2 ou 3, caractérisée en ce qu'une couche d'une trame de base remplissant la section transversale se compose de dispositifs de type ventilateurs agissant sur un écoulement axial et dont approximativement autant tournent à gauche qu'à droite.

7. Plaque selon la revendication 2 ou 3, caractérisée en ce qu'une couche comportant une trame de base carrée contient des pyramides régulières dont les côtés sont tour à tour ouverts et fermés ou partiellement fermés, de sorte qu'à partir de chaque base du carré un seul côté de pyramide s'ouvre et les sommets de pyramides sont tous orientés dans la même direction.

8. Plaque selon la revendication 7, caractérisée en ce que :

a) sur le sommet de la pyramide de la première couche se trouve le pied de quatre pyramides voisines de la deuxième couche, à condition que les côtés des carrés élémentaires des deux couches soient orientés parallèlement,

b) la troisième couche coïncide avec la première couche, à la différence près qu'en projection verticale les côtés de pyramides fermés de la troisième couche viennent s'appliquer sur les côtés de pyramides ouverts de la première couche,

c) la quatrième couche coïncide avec la deuxième couche, à la différence près qu'en projection verticale les côtés de pyramides fermés de la quatrième couche viennent s'appliquer sur les côtés de pyramides ouverts de la deuxième couche et

d) avec la cinquième couche le cycle se répète dans la structure de la plaque.

9. Plaque selon l'une des revendications 1 et 7, caractérisée en ce que seules la première et la deuxième couches décrites dans la revendication 8 définissent le cycle dans la structure de la plaque.

10. Plaque selon la revendication 2, caractérisée en ce qu'une partie des faces latérales des pyramides est fermée de manière telle que seule une face latérale fermée s'applique sur chaque bord d'un polygone élémentaire.

11. Plaque selon la revendication 1, caractérisée en ce que la trame de base plane se compose de carrés sur lesquels sont montées des pyramides équilatérales dont les sommets sont orientés dans la même direction à condition que ces sommets se trouvent sur les coins du plan de base carré de la couche suivante.

12. Plaque selon la revendication 1, caractérisée en ce que des pyramides régulières sont disposées vers les deux côtés d'une trame de base plane, de sorte qu'il se forme une double couche et que la plaque soit constituée de doubles couches de ce type.

13. Plaque selon l'une des revendications 2 et 7, caractérisée en ce que deux couches forment une double couche de manière telle que les sommets des pyramides s'aboutent et que la surface de projection, en projection verticale vers la double couche, soit fermée.

14. Plaque selon l'une des revendications 2 et 13, caractérisée en ce qu'elle se compose de deux doubles couches identiques dans lesquelles des bases des doubles couches s'aboutent de manière telle que les côtés de pyramides fermés ou partiellement fermés, partant des bases carrées, d'une double couche forment à chaque fois une surface plane avec les côtés de la double couche voisine.

15. Plaque selon la revendication 1, caractérisée en ce que la trame de base plane se compose de carrés ou d'hexagones équilatéraux sur lesquels sont montées à chaque fois des pyramides équilatérales vers chaque côté de l'aire de la section transversale de sorte que les pointes de couches voisines s'aboutent lors d'un montage en couches.

16. Plaque selon la revendication 12, caractérisée en ce que les bases des pyramides et approximativement la moitié du nombre de faces latérales des pyramides sont ouvertes et les autres faces latérales restent fermées.

17. Plaque selon l'une des revendications 1, 2 et 5 ou 10 ou 16, caractérisée en ce que les faces latérales fermées sont de forme ondulée de façon à ce que les bosses et les creux de ces surfaces soient orientés parallèlement à l'aire de la section transversale du canal d'écoulement.

18. Plaque selon l'une des revendications 6, 12 ou 13, caractérisée en ce qu'on utilise comme élément de surface de base un hexagone régulier à la place d'un quadrilatère.

19. Procédé de fabrication de plaques selon la revendication 8, caractérisé en ce qu'on utilise des bandes de tôle estampées et repliées sur les bords pour confectionner une double couche et la plaque est constituée de doubles couches de ce type, respectivement désaxées de 180°.

20. Procédé de fabrication de plaques selon la revendication 9, caractérisé en ce qu'à la place des tôles à double bande on utilise, pour confectionner la plaque, des tôles estampées, se composant d'un nombre quelconque de bandes, qui résultent de l'aboutement réciproque des bandes et qui sont repliées et mises bout à bout.

Fig. 1

Fig. 2

Fig. 3

Fig. 5

Fig. 4

Fig. 6

Fig. 7

Fig. 8

Fig. 9

Fig. 11

Fig. 10

Fig. 12

Fig. 14

Fig. 15

Fig. 13